(19) Europäisches Patentamt
European Patent Office
Office européen des brevets

(11) **EP 4 531 033 B1**

(12) **FASCICULE DE BREVET EUROPEEN**

(45) Date de publication et mention
de la délivrance du brevet:
**15.07.2026 Bulletin 2026/29**

(21) Numéro de dépôt: **24219927.1**

(22) Date de dépôt: **11.10.2018**

(51) Classification Internationale des Brevets (IPC):
*G06F 21/36* (2013.01)     *G06F 3/147* (2006.01)
*G09G 5/14* (2006.01)     *G06F 21/84* (2013.01)

(52) Classification Coopérative des Brevets (CPC):
**G06F 3/147; G06F 21/36; G06F 21/84; G09G 5/14;**
G09G 2340/14; G09G 2340/145; G09G 2358/00

(54) **PROCÉDÉ DE TRAITEMENT DE DONNÉES D'AFFICHAGE, DISPOSITIF ET PROGRAMME CORRESPONDANT**

VERFAHREN ZUR VERARBEITUNG VON ANZEIGEDATEN, VORRICHTUNG UND PROGRAMM DAFÜR

DISPLAY DATA PROCESSING METHOD, DEVICE AND PROGRAM THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.10.2017 FR 1759960**

(43) Date de publication de la demande:
**02.04.2025 Bulletin 2025/14**

(62) Numéro(s) de document de la (des) demande(s)
initiale(s) en application de l'article 76 CBE:
**18199979.8 / 3 474 171**

(73) Titulaire: **Banks and Acquirers International Holding**
**75015 Paris (FR)**

(72) Inventeur: **BEUNARDEAU, Marc**
**75015 PARIS (FR)**

(74) Mandataire: **Germain Maureau**
**12, rue Boileau**
**69006 Lyon (FR)**

(56) Documents cités:
EP-A2- 2 023 333      FR-A1- 3 023 042
US-A1- 2016 125 181      US-A1- 2016 246 999

**Description**

**1. Domaine**

L'invention se rapporte à la sécurisation de la saisie de données. Plus particulièrement, l'invention se rapporte à une méthode de masquage de l'information affichée sur un écran. Un objet de l'invention est en effet de sécuriser la saisie de données sensibles sur des écrans tactiles.

**2. Art antérieur**

La saisie sécurisée de données sur les dispositifs de communication modernes est un véritable défi. Dans le cas des terminaux de communication mobiles (de type smartphone), dont la plupart sont aujourd'hui équipés d'écrans tactiles, l'entrée de l'utilisateur est réalisée en touchant l'écran. Ces informations sont d'abord traitées par le système d'exploitation et envoyées aux applications appropriées. Or, de nombreuses applications gèrent des données sensibles. C'est par exemple le cas des applications de paiement.

La possibilité de réaliser un paiement à l'aide d'un terminal de communication de type smartphone ou tablette a été largement documentée, particulièrement depuis que les terminaux de communication grand public intègrent des environnements de traitement des données sécurisés (carte SIM sécurisée par exemple). Parmi les nombreuses méthodes de paiement qui ont été divulguées, une part substantielle d'entre elles utilisent une application spécifique, installée sur le terminal de communication, et qui permet de sauvegarder et d'utiliser une pluralité de cartes de paiement : les données de la carte de paiement sont saisies, ou prises en photos à l'aide du terminal de communication et sauvegardées, au moins partiellement, au sein de l'environnement sécurisé du terminal de communication de l'utilisateur. Lorsqu'il souhaite utiliser son terminal de communication pour effectuer un paiement auprès d'un commerçant, l'utilisateur ouvre l'application idoine sur son terminal de communication, sélectionne la carte de paiement qu'il souhaite utiliser et valide le paiement : cette validation peut nécessiter la saisie d'un code d'identification personnel de type code PIN.

Dans le même ordre d'idée, les nouveaux terminaux de paiement embarquent également des écrans tactiles qui peuvent être utilisés pour saisir des données confidentielles de type code d'identification personnel (PIN) : c'est par exemple le cas de terminaux de paiement dits légers, installés chez un commerçant en utilisant une tablette tactile. La tablette tactile fait alors office de caisse enregistreuse et de terminal de paiement en utilisant une ou plusieurs applications adéquates.

D'autres dispositifs de sécurisation (par exemple sécurisation d'accès à des bâtiments, à des ressources, etc.) embarquent également des écrans tactiles sur lesquels les utilisateurs doivent saisir des mots de passe ou des codes d'accès.

La généralisation de ce type d'écran pour effectuer une saisie a notamment posé un problème de sécurité : des personnes malveillantes ont tiré avantage de ces nouveaux dispositifs de saisie d'information pour obtenir de l'information confidentielle. Cela se produit notamment sur les terminaux de communication de type smartphone ou tablette : l'objectif premier de ces terminaux étant d'être des terminaux conviviaux et multimédia, l'utilisateur a une grande latitude d'installation d'applications. Or de nombreuses applications embarquent des modules logiciels espions dont le but est d'obtenir frauduleusement de l'information.

Il existe de nombreuses façons dont un adversaire peut tenter de voler cette information :

- en observant l'écran à distance ;
- en faisant fonctionner une application malveillante, comme une fenêtre invisible, pour relayer les entrées utilisateur vers une application légitime ;
- en ayant une application malveillante qui examine la mémoire ou le cache du périphérique et qui mappe les modifications obtenues aux actions de l'utilisateur ;
- en utilisant l'analyse des canaux latéraux ou des canaux cachés (sur l'appareil ou l'utilisateur) pour inférer l'action de l'utilisateur.

Cette liste n'est bien entendu pas exhaustive. Chacune de ces attaques peut être réalisée avec succès sur un terminal de communication actuel.

Une contre-mesure classique et largement documentée consiste à rendre aléatoire le positionnement des touches de clavier affichées sur l'écran tactile. C'est la stratégie suivie par de nombreuses solutions, avec un minimum d'effort. Une société nommée myPinPad™ a proposé un clavier visuel mixte pour que les utilisateurs puissent taper leurs codes d'identification personnels (at autres données confidentielles), les applications espion potentielles recevant des informations mélangées. Toutefois, cela n'est pas satisfaisant à de nombreux niveaux. Par exemple, la solution proposée nécessite une infrastructure substantielle. En outre, elle ne protège pas contre toutes les attaques mentionnées ci-dessus, si l'adversaire peut obtenir ne serait-ce qu'une seule copie de l'image de l'écran. En effet, le problème majeur du clavier aléatoire est qu'il permet effectivement de sécuriser la saisie effectuée sur l'écran à la condition que l'adversaire ne puisse pas obtenir une copie de ce clavier aléatoire. Or l'obtention d'une copie d'écran n'est en général pas une opération de traitement complexe et peut être réalisée par une application malveillante. Une fois la copie d'écran obtenue, l'application malveillante peut à nouveau interpréter correctement les saisies réalisées par l'utilisateur.

Il est donc nécessaire de disposer d'une solution de saisie qui résolve ces problèmes de l'art antérieur et permette une saisie sécurisée des données sur un clavier tactile affiché sur un écran d'un terminal. Les documents FR3023042 et EP2023333 décrivent d'autres méthodes dans lesquelles on génère et affiche un grand nombre de versions incomplètes ou bruitées du clavier

## 3. Résumé

La technique proposée ne présente pas ces inconvénients de l'art antérieur. Plus particulièrement, la technique proposée met en œuvre un principe de rémanence d'affichage et/ou de perception de l'information lorsqu'elle est affichée sur un écran. On utilise ce phénomène pour générer des images dégradées, qui, lorsqu'elles sont visualisées, permettent à l'utilisateur de deviner et/ou lire les images de l'écran. La technique divulguée porte sur la dégradation intelligente de l'image, dans un objectif ultérieur d'affichage des images dégradées. L'invention, cependant, n'est nullement limitée à cette seule fonction d'affichage ultérieure, mais peut également être mise en œuvre dans d'autres types de procédés ou de domaines, concernant la sécurisation d'une information.

Plus particulièrement, l'invention se rapporte à un procédé de traitement de données d'affichage, le procédé étant mis en œuvre par au sein d'un dispositif électronique de traitement de données, lesdites données d'affichage étant représentatives d'au moins une information à afficher sur un écran. L'invention est telle que définie dans la revendication 1

Ainsi, à la différence des techniques de l'art antérieur, l'information est dégradée lors du traitement des images de référence, information qui par la même ne pourra donc pas être lue par la suite.

Selon une caractéristique particulière, le nombre d'images dégradées est supérieur ou égal à trois.

Ainsi, un premier niveau de sécurisation est atteint puisqu'il faut au minimum trois image dégradées pour espérer obtenir une indication de l'information présente dans cette image.

Selon une caractéristique particulière, le nombre d'images dégradées est supérieur ou égal à une fréquence d'affichage d'image de l'écran sur lequel lesdites images dégradées doivent être affichées.

Ainsi, lorsqu'elles sont affichées, les images dégradées produisent un effet de rémanence, soit sur l'écran d'affichage, soit sur la rétine des yeux de l'utilisateur visualisant ledit écran d'affichage.

Selon une caractéristique particulière, caractérisé en ce que ladite étape de génération d'au moins une image dégradée met en œuvre au moins une procédure de dégradation parmi les fonctions suivantes :

- extraction de portions de ladite image de référence délivrant au moins une image dégradée ;
- adjonction de bruit à ladite image de référence, délivrant au moins une image dégradée.

Ainsi, plusieurs méthodes de dégradation peuvent être utilisées, seules ou en combinaison, pour produire un ensemble d'image dégradées à partir de l'image d'origine, ce qui présente l'avantage de ne pas permettre à un attaquant de deviner quelle sera, à l'avance, la méthode utilisée.

Selon un mode de réalisation non revendiqué, ladite fonction d'adjonction de bruit à ladite image de référence, délivrant au moins une image dégradée, comprend, pour une pluralité de pixels de l'image de référence, l'application de l'expression suivante :

$$D_t(x, y) = A \, \text{thr}(F(T(x, y)))$$

dans laquelle :

A représente une valeur d'attribution ;
$D_t(x, y)$ représente le pixel de coordonnées $(x, y)$ de l'image dégradée $D_t$ ;
Thr est une fonction de seuillage ;
$F$ est une fonction de contraste ; et
$T(x, y)$ représente le pixel de coordonnées $(x, y)$ de l'image de référence notée $T$.

Ainsi, on réalise une dégradation de l'image de référence en utilisant les pixels de référence comme une entrée d'une procédure de dégradation afin d'obtenir les pixels de l'image dégradée.

Selon une caractéristique particulière, ladite fonction de contraste est :

$$F(x) = \frac{\alpha x + \beta}{255\alpha + \beta} + \gamma$$

dans laquelle :

$\alpha$ est un paramètre de contrôle de densité de l'image dégradée ;
$\beta$ est un paramètre de contrôle de contraste ; et
$\gamma$ est un paramètre de contrôle de niveau de bruit.

Ainsi, il est possible de régler le contraste d'une image dégradée de manière paramétrée et/ou dynamique : cela permet d'adapter le rendu de l'image dégradée aux conditions d'implémentation, notamment en fonction de l'effet ultérieur recherché (notamment en termes de lisibilité, de sécurité et par rapport aux caractéristiques de l'écran).
Selon la revendication 1, ladite fonction d'adjonction de bruit à ladite image de référence, délivrant au moins une image dégradée, comprend la génération d'un nombre prédéterminé (K) d'images dégradées à l'aide d'un générateur d'images dégradées mettant en œuvre, pour chaque pixel (x,y) de l'image de référence, une distinction de traitement selon la couleur dudit pixel, ladite distinction de traitement comprenant :

- l'attribution d'une même couleur aléatoire donnée pour les pixels (x,y) correspondant des (K) images dégradées lorsque la couleur du pixel (x,y) de l'image de référence est égal à une couleur prédéterminée ;
- l'attribution d'une couleur aléatoire différente pour les pixels (x,y) correspondant des (K) images dégradées lorsque la couleur du pixel (x,y) de l'image de référence est différent de la couleur prédéterminée.

Ainsi, dans ce mode de réalisation, on génère un ensemble d'images dégradées en une seule passe : une telle mise en œuvre permet de réaliser une certaine corrélation des images qui composent cet ensemble d'images et de régler cette corrélation en une seule passe, ce qui est avantageux d'un point de vue procédural, car cela consomme moins de mémoire et/ou de puissance de calcul pour la génération d'une seule image.
Selon un mode de réalisation particulier, ledit procédé comprend au moins une itération d'une étape d'affichage de ladite au moins une image dégradée.
Ainsi, les affichages successifs des images dégradées permettent de produire l'effet de rémanence. Lorsque cet affichage itératif des différentes images dégradées est mis en œuvre (chaque image dégradée étant affichée une fois, puis une nouvelle itération d'affichage est mise en œuvre), un effet de rémanence est produit, soit directement sur l'écran sur lequel l'affichage est effectué (écran qui n'est pas nécessairement celui du dispositif électronique qui met en œuvre la présente technique), soit sur la rétine des yeux de l'utilisateur qui visualise cet écran.
Selon un mode de réalisation particulier, ladite au moins une image de référence est représentative d'un clavier aléatoire ou pseudo aléatoire à afficher.
Ainsi, il est possible de générer une version « rémanente » du clavier à afficher à l'écran d'un termina ou d'un dispositif. Cette version « rémanente » du clavier est ainsi constituée d'une pluralité d'images dégradées qui, prises isolément, ne sont pas en mesure de renseigner un attaquant sur la position réelle des touches du clavier aléatoires, et donc par conséquent, ne sont pas en mesure d'indiquer à l'attaquant l'emplacement des touches du clavier. Ceci permet de résoudre un certain nombre des problèmes de sécurité actuellement rencontrés lors de l'affichage des claviers sur un dispositif de saisie tactile.
Selon un autre aspect, il est également décrit un dispositif de traitement de données d'affichage, selon la revendication 9.
Les images dégradées générées peuvent alors faire l'objet d'un affichage, que ce soit par le dispositif (si celui-ci possède des moyens d'affichage) ou bien par un autre dispositif auquel les images générées sont transmises (soit en avance, soit au fil de l'eau en fonction des besoins d'affichage du dispositif).
Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.
En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.
Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.
La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus ainsi que les différentes caractéristiques qui les constituent, sont combinables entre eux pour la mise en œuvre de la technique proposée.

## 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un premier exemple de dégradation d'images selon une première technique ;
- La figure 2 présente un deuxième exemple de dégradation d'images selon deuxième technique ;
- La figure 3 décrit la mise en œuvre de la présente technique d'un point de vue général ;
- La figure 4 divulgue un terminal de communication de manière synthétique, apte à mettre en œuvre les méthodes divulguées.

## 5. Description

### 5.1. Principe général

Le principe général de la présente technique consiste à dégrader (ou moduler) l'information avant son affichage sur un écran (d'un terminal ou d'un dispositif d'affichage). Plus particulièrement, comme explicité précédemment, la perception ultérieure de l'information modulée (ou dégradée) tire parti d'un phénomène physiologique appelé « persistance rétinienne » et/ou d'un phénomène physique de persistance de l'image à l'écran (en fonction des caractéristiques de l'écran d'affichage). Pour ce qui est de l'exemple de la saisie de données sensibles, en utilisant ce phénomène et en modulant l'affichage (par exemple l'affichage du clavier aléatoire), l'utilisateur perçoit (distingue) correctement ce qui est affiché (i.e. par exemple le clavier aléatoire) ; Au contraire, une application malveillante ne dispose que d'une information parcellaire (image par image par exemple) : cette information ne peut pas permettre de déduire une quelconque information quant à l'agencement et/ou aux informations (par exemple touches de clavier) affichées sur l'écran. La technique proposée, cependant, n'est pas limitée à ce seul cas d'affichage d'un clavier aléatoire.

Dans un cas particulier, on suppose que l'information à afficher à l'écran prend la forme d'une image, image qui comprend par exemple un ensemble de touches d'un clavier. L'image peut présenter, avantageusement, un clavier aléatoire, dont l'ordre des touches est défini en fonction d'un aléa préalablement déterminé : cette détermination de l'aléa, et donc de l'ordre des touches sur le clavier, peut être faite au moment de la génération de l'image du clavier lui-même.

La technique divulguée porte sur la dégradation intelligente de l'image, dans un objectif ultérieur d'affichage des images dégradées. L'invention, cependant, n'est nullement limitée à cette seule fonction d'affichage ultérieure, mais peut également être mise en œuvre dans d'autres types de procédés ou de domaines, concernant la sécurisation d'une information.

Comme cela est explicité par la suite, plusieurs techniques différentes peuvent être utilisées pour moduler l'affichage des informations à l'écran. Parmi ces techniques, on distingue plusieurs classes différentes :

- une première classe se base sur l'affichage itératif de portions aléatoires de l'image ; à un instant donné, une portion de l'image est affichée à l'écran : cette portion aléatoire est également définie en fonction d'un aléa, lequel est obtenu au cours de la procédure d'affichage ; à l'instant suivant, une autre portion aléatoire de l'image est affichée à l'écran ; et ainsi de suite, tout au long de l'affichage de cet écran ;
- une deuxième classe se base sur l'affichage itératif d'images pleines (c'est-à-dire une image complète) chaque image pleine étant représentative d'une variation de l'image d'origine : à chaque itération, c'est une image dégradée qui est affichée à l'écran, cette image dégradée résultant d'un traitement effectué sur l'image d'origine, afin de l'altérer ;
- une troisième classe consiste à mixer les deux techniques précédemment décrites.

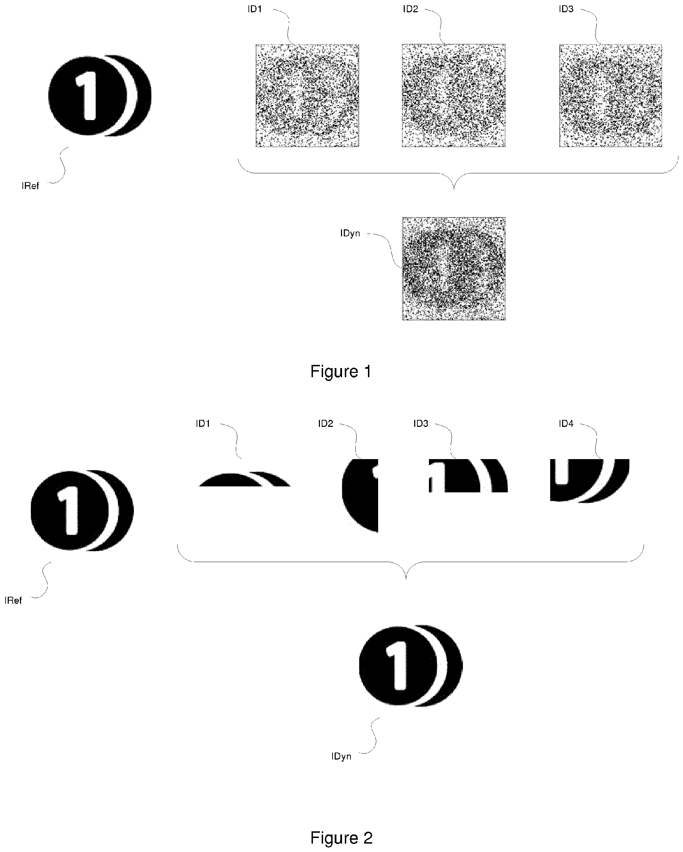

Ces techniques ont en commun la caractéristique suivante : l'affichage (fixe) de l'image d'origine est remplacé par un affichage itératif d'une pluralité de versions dites dégradées (découpées et/ou modifiées) de l'image d'origine (image de référence). L'itération de l'affichage est mise en œuvre afin de produire, sur la rétine de l'utilisateur et/o sur l'écran d'affichage, une rémanence, résultant de la superposition de la pluralité des versions dégradées, cette rémanence permettant de reconnaitre (ou de distinguer, deviner) effectivement l'image d'origine (et donc d'effectuer les opérations de saisie nécessaires, si besoin). L'image rémanente est également appelée image dynamique. La figure 1 présente la deuxième classe de technique d'affichage dans laquelle une image de référence (IRef) est utilisée pour produire plusieurs images dégradées (I1, I2, I3), ces images dégradées étant une variation de l'image d'origine. Aucune de ces images dégradée (I1, I2, I3), individuellement, ne permettant la reconnaissance de l'image d'origine. À but d'illustration, une image dynamique (IDyn), résultante de la superposition des trois images dégradées (I1, I2, I3) est également affichée. On y distingue plus nettement le chiffre 1 de l'image d'origine.

La figure 2 présente la première classe de technique d'affichage dans laquelle une image de référence (IRef) est utilisée pour produire plusieurs images dégradées (I1, I2, I3, I4), ces images dégradées étant une portion aléatoire de l'image d'origine. Aucune de ces images dégradée (I1, I2, I3, I4), individuellement, ne permettant la reconnaissance de l'image d'origine. À but d'illustration, une image dynamique (IDyn), résultante de la superposition des quatre images dégradées (I1, I2, I3, I4) est également affichée. Dans cet exemple de la figure 2, les portions de l'image d'origine sont continues (pour faciliter la construction de la figure). Bien évidemment, dans une mise en œuvre concrète, les portions de l'image d'origine sont aléatoirement obtenues en fonction de paramètres d'aléa. Il est donc tout à fait possible (et souhaitable pour des questions de robustesse du processus), que les portions d'images (les images dégradées I1,..., In) correspondent à un sous ensemble de pixels de l'image d'origine, sous ensemble partiellement ou totalement non continu, correspondant à un tirage aléatoire d'un nombre également aléatoire de pixels dans l'image d'origine.

Selon les normes en vigueur, l'affichage d'une donnée sur un écran est effectué à une vitesse d'environ 30 images par seconde. Certains dispositifs disposent de fréquences d'affichage plus élevées. Cependant, on considère généralement qu'un affichage est perçu (par l'œil humain) comme correct à partir d'une fréquence de 24 images par seconde. L'effet de rémanence sur la rétine est perçu à partir de cette fréquence.

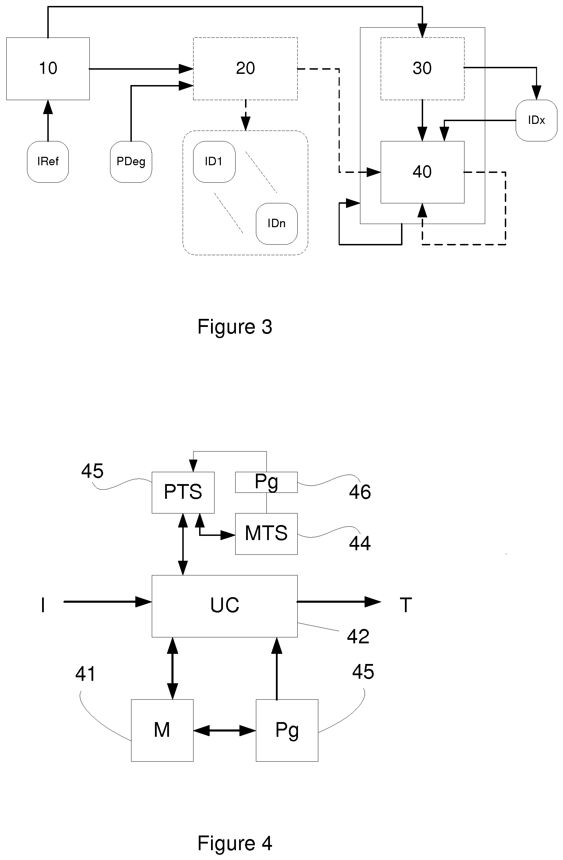

Quelle que soit la technique employée, la méthode d'affichage générale, présentée en relation avec la figure 3, comprend les étapes suivantes :

- une étape d'obtention (10) d'une image de référence (IRef) représentative d'au moins une information à afficher ;
- optionnellement, obtention (20) d'au moins une image dégradée (ID1,..., IDn) en fonction de ladite image de référence (IRef) et d'au moins un paramètre de dégradation (PDeg) (également appelé paramètre d'aléa) ;
- au moins une itération des étapes suivantes :

  - obtention (30) d'une image dégradée (IDx) (optionnellement en fonction de ladite image de référence (Iref) et d'au moins un paramètre de dégradation (PDeg), lorsque cette obtention n'a pas été réalisée précédemment aux itérations ou directement en puisant dans les images obtenues à l'étape 20) ;
  - affichage (40) de ladite image dégradée (IDx) ;

En fonction des modes de réalisation, les itérations d'obtention d'image dégradées peuvent être mises en œuvre concomitamment ou précédemment aux itérations d'affichages. En d'autres termes l'obtention des images dégradées (potentiellement de manière itérative) peut précéder l'affichage itératif de celles-ci.

Dans au moins un mode de réalisation, l'obtention des images dégradées est mise en œuvre de manière probabiliste. Plus particulièrement, l'obtention des images dégradées à partir de l'image de référence est mise en œuvre en fonction d'au moins une procédure probabiliste de dégradation. L'avantage de cette solution est que, statistiquement, le phénomène de persistance rétinienne permet à l'utilisateur de lire, ou à tout le moins de deviner, quelles sont les informations affichées à l'écran, et donc, dans le cas où l'image de référence est un clavier aléatoire, où sont positionnés les chiffres de ce clavier aléatoire. On note que la technique proposée ne s'applique pas uniquement à la mise en œuvre d'un masquage d'un clavier aléatoire, mais également de tout type d'information sensible devant être affichée sur un écran, et dont on ne souhaite pas qu'elle puisse être interceptée par une copie d'écran, cette copie d'écran étant par exemple réalisée par un logiciel malveillant.

Le nombre d'images dégradées générées dépend également du mode de réalisation, notamment dépend de la puissance de calcul du dispositif qui met en œuvre la technique décrite, de la fréquence d'affichage de l'écran (de 24Hz à 60hz) et donc du nombre d'images affichées à l'écran par seconde.

L'invention consiste ainsi à remplacer l'image statique d'origine (image de référence) par une image dynamique générée à partir de l'image statique (l'image dynamique étant la résultante de la succession des images dégradées) : l'image dynamique peut être apparentée à une vidéo ou a tout le moins à un flux. Cette image dynamique est générée de telle manière que les utilisateurs peuvent facilement voir ou deviner le contenu, par persistance soit rétinienne, soit matérielle (du fait de la persistance de l'écran d'affichage par exemple). Dans le même temps, aucune image dégradée ne fournit pas assez d'information sur l'image de référence. L'origine de cette persistance est que des images affichées en succession rapide sont superposées, ce qui correspond à une moyenne mathématique des images (trames) précédentes.

L'image dynamique est donc générée de sorte que la moyenne de trames (d'images) successives permet de percevoir (visuellement) l'image de référence, ou une image raisonnablement proche de celle-ci. Cependant, les programmes informatiques malveillants peuvent, la plupart du temps, ne capturer qu'une trame à la fois (c'est-à-dire la mémoire tampon graphique), correspondant à une seule image dégradée, voire tout au plus quelques trames espacées (par exemple rétroscope), mais rien de proche de la capture à la fréquence d'affichage de l'écran soit de 24Hz à 60Hz ;

Lorsque la technique d'obtention d'images dégradée est probabiliste, il est possible de vérifier la sécurité de chaque image générée avant de l'utiliser. Par exemple, l'image originale peut être générée à partir de l'une des techniques décrites dans la présente (avec une probabilité extrêmement faible, bien sûr).

Cela peut être évité en utilisant un algorithme qui peut être utilisé par l'attaquant. Par exemple, dans le cas du clavier, il s'agirait par exemple d'un algorithme de reconnaissance optique de caractères (ou d'autres algorithme d'attaque adaptés à la situation particulière de l'information affichée). Avant l'affichage d'une image, il est donc possible d'exécuter un de ces algorithme de reconnaissance et de vérifier qu'il échoue (à reconnaitre un ou plusieurs caractères) avant d'utiliser l'image générée. On note que puisque l'algorithme d'attaque (algorithme de reconnaissance optique de caractères) délivre habituellement une mesure de confiance (plus précise qu'un oui / non), il est possible de combiner plusieurs de ces algorithmes pour mesurer la sécurité (en utilisant par exemple un soft max ou une moyenne).

La solution proposée présente l'avantage évident d'être facilement intégrable comme couche supplémentaire de protection de l'affichage et/ou de la saisie de données sur écran tactile. Pour ce qui est du problème de saisie d'information d'identification ou d'authentification (par exemple des images brouillées comme dans processus de saisie de type CATPCHA), et pour le problème plus large d'authentification sur des dispositifs tiers ouverts (par exemple un clavier visuel aléatoire), la solution de l'invention permet de se prémunir d'un espionnage logiciel, par l'intermédiaire d'une application malveillante.

Un autre avantage de cette technique est qu'elle exploite une propriété intrinsèque de l'œil humain, et donc ne nécessitent aucun matériel supplémentaire ou composant logiciel pour les utilisateurs. En ce sens, elle est beaucoup moins dépendante de la technologie que d'autres techniques.

5.2. Description d'un premier mode de réalisation non-revendiqué

Il est décrit un premier mode de réalisation de la technique préalablement exposée, dans lequel, selon une première variante, l'image de référence $T$ est une image en niveaux de gris.

On considère une image de référence $T$ représentée comme un tableau $N{\times}M$ d'entiers. On utilise la notation $T(x,y)$ pour désigner la valeur du pixel en position $(x,y)$ dans l'image $T$. On choisit la convention que $T(x,y)=0$ si ce pixel est noir, et $T(x,y)=255$ si le pixel est blanc. Cela peut être adapté pour correspondre à la gamme de contraste de l'écran si nécessaire.

L'objectif est de définir le contenu d'au moins une image dégradée $Dt$ de dimensions identiques (N${\times}$M), de sorte que la moyenne de plusieurs occurrences $(K)$ d'images $Dt$ fournit une approximation de l'image de référence $T$. Notons que $Dt$ dépend implicitement du temps - en fait on décrit un générateur pour $Dt$ qui est Probabiliste, et donc produira un $Dt$ différent chaque fois qu'il est appelé. Dans ce mode de réalisation, de manière arbitraire, pour la référence nous choisissons $K=32$, mais n'importe quel autre nombre peut être choisi, selon la situation, en fonction par exemple des caractéristiques de l'écran d'affichage.

On suppose également que l'on dispose d'un générateur probabiliste *Rnd()*, qui renvoie un nombre aléatoire ou pseudo-aléatoire compris entre *0 et 1*, en utilisant l'une des techniques bien connues pour y parvenir. On définit le générateur probabiliste :

$$\text{thr}(r) \leftarrow 1_{\text{Rnd}()<r}$$

Dans lequel $1_A$ est l'indicatrix sur A. En d'autres termes, thr(r) renvoie 1 si Rnd () <r, et 0 sinon. Alors chaque pixel d'une image dégradée Dt est calculé comme :

$$D_t(x, y) = 255 \, \text{thr}(F(T(x, y)))$$

Dans laquelle F(x) est une fonction de contraste. Le rôle de la fonction F est de contrôler les paramètres de contraste et de bruit de l'image résultant de la superposition des images dégradées (appelée image dynamique). Cette fonction, dans ce mode de réalisation, est la suivante :

$$F(x) = \frac{\alpha x + \beta}{255\alpha + \beta} + \gamma$$

Le paramètre $\alpha$ (rampe) contrôle la densité de l'image résultante, $\beta$ (niveau) contrôle le contraste et $\gamma$ (noise) contrôle le niveau de bruit. Ces paramètres sont ajustés pour atteindre l'effet désiré. Plus particulièrement, ils peuvent être obtenus par exemple en minimisant l'erreur contrainte :

$$\text{Err}(\alpha, \beta, \gamma) = \sum_{x,y}^{N,M} \left\| T(x, y) - \frac{255}{32} \sum_{t=1}^{32} \text{thr}(F(T(x, y))) \right\|^2 + \mu(T(x, y) - c)^2$$

expression dans laquelle $\mu$ est une constante qui règle si l'image dégradée ressemble plus ou moins à l'image de départ (par exemple un multiplicateur de Lagrange qui détermine la force de la contrainte de l'image dynamique en moyenne de la valeur c (par exemple c=0)). En d'autres termes, $\mu$ est une valeur qui permet d'effectuer un réglage de l'image dégradée : $\mu$ permet de savoir si l'on souhaite que l'image dégradée ressemble plus ou moins à l'image de référence.

La résolution de ce problème d'optimisation peut être mise en œuvre en utilisant des méthodes génériques. Dans ce mode de réalisation, les inventeurs suggèrent d'utiliser les paramètres suivants :

$$\alpha = 1/255, \ \beta = 0.3, \gamma = 0.1.$$

On note que les valeurs de ces paramètres peuvent être adaptées en utilisant différentes mesures statistiques. Par exemple, il est possible d'utiliser l'information mutuelle qui mesure la dépendance entre deux variables aléatoires. On peut avoir pour objectif de minimiser l'information mutuelle des variables aléatoires utilisées pour générer les images dégradées et de la variable aléatoire constate représentant l'image de référence T.

Une fonction non linéaire de contraste peut également être utilisée pour s'ajuster à la courbe Gamma de l'écran, si cela s'avère utile.

Une extension de la technique présentée précédemment peut également être mise en œuvre pour une image de référence en couleur. Dans ce cas, chaque pixel de l'image de référence T est représenté par un vecteur de couleur, vecteur à trois dimensions dont chaque dimension représente une valeur de couleur. L'expression suivante peut alors être mise en œuvre pour calculer la valeur de chaque pixel (x,y) de l'image dégradée :

$$D_t(x, y) = T(x, y)\text{thr}(F(T(x, y)))$$

Dans ce mode de réalisation, que ce soit dans le cas du traitement en couleur, comme dans le cas de celui en niveau de gris, les images dégradées Dt sont générées à une vitesse permettant de les afficher à K images par seconde.

D'une manière générale (couleur ou niveaux de gris), la valeur de chaque pixel est définie par l'expression :

$$D_t(x, y) = A.\text{thr}(F(T(x, y))),$$

dans laquelle *A* représente une valeur d'attribution (127, 255, *T(x, y)*) dépendante du contexte d'implémentation.

On a décrit ce premier mode de réalisation sur la base d'une modification intégrale de l'image de référence. Il est clair cependant, qu'en fonction des conditions opérationnelles réelles de mise en œuvre, seules une ou plusieurs parties de l'image de référence peuvent être utilisées. Par exemple, lorsque l'image de référence comporte des portions ne comprenant aucune information sur le contexte (aucune information contextuelle, par exemple aucun texte), il est tout à fait envisageable de ne pas modifier ces parties de l'image lors de la génération des images dégradées, et de limiter, approximativement ou non, la modification aux portions (ou emplacements) dans lesquels des informations sont présentes. Ceci est également valable pour tous les autres modes de réalisation et variantes.

5.3. <u>Description d'un deuxième mode de réalisation</u>

Il est décrit un deuxième mode de réalisation de la technique préalablement exposée, dans lequel un deuxième générateur d'images dégradée est utilisé. Dans ce mode de réalisation, on utilise un générateur arbitrairement nommé *USk(T),* qui créé, à partir d'une image de référence *T,* une pluralité (K) d'images dégradées. Pour l'exposé qui va suivre, il a été arbitrairement choisi de limiter la variable K à la valeur 3. Il est bien entendu, comme pour le mode de réalisation précédent, que cette valeur peut être adaptée, notamment en fonction des paramètres de l'écran d'affichage, et notamment la fréquence d'affichage et/ou la perception de la rémanence par (les yeux de) l'utilisateur. On suppose, comme cela était le cas précédemment, que les images sont de forme rectangulaire, et qu'elles ont une taille prédéfinie. Le pixel de coordonnées (0,0) représente le pixel en haut et à gauche de l'image. On suppose également que le dispositif dispose de moyens d'affichage de la couleur, par exemple selon le format RGB. La technique décrite peut cependant aisément être mise en œuvre dans d'autres types de format, qu'ils soient de couleurs ou en noir et blanc. Quoi qu'il en soit, compte tenu de ce format RGB, la couleur d'un pixel est encodée selon l'expression suivante :

$$R + (G + (B << 8) << 8)$$

avec respectivement R, G et B des variables comprises entre 0 et 255 et l'opérateur << représentant l'opération de décalage à gauche d'un nombre de bits (ici 8).

Le raisonnement qui sous-tend la mise en œuvre de cet générateur *USk(T),* et par exemple *Us3(T)* (lorsque trois images dégradées sont générées) est que l'on l'appelle un nombre prédéterminé de fois par seconde (par exemple huit fois par seconde pour *Us3(T)* pour s'assurer que le phénomène de rémanence est suffisant). En fonction de la fréquence d'affichage, il est également possible d'appeler le générateur de manière plus fréquente. En fonction des modes de réalisation, il est également possible de pré-calculer des images à partir de le générateur et de répéter l'affichage de ces images, bien que cette solution soit moins sécurisée (surtout quand la fréquence d'affichage est élevée et que la valeur de K est faible). Le générateur *USk(T)* génère des trames de couleur *(ou de gris)* aléatoirement uniformes. *D'une manière générale, dans ce mode de réalisation,* la procédure d'adjonction de bruit à l'image de référence (IRef), comprend la génération d'un nombre prédéterminé (K) d'images dégradées à l'aide d'un générateur d'images dégradées (Usk) mettant en œuvre, pour chaque pixel (x,y) de l'image de référence, une distinction de traitement selon la couleur du pixel, la distinction de traitement comprenant :

- l'attribution d'une même couleur aléatoire donnée pour les pixels (x,y) correspondant des (K) images dégradées lorsque la couleur du pixel (x,y) de l'image de référence est égal à une couleur prédéterminée ;
- l'attribution d'une couleur aléatoire différente pour les pixels (x,y) correspondant des (K) images dégradées lorsque la couleur du pixel (x,y) de l'image de référence est différent de la couleur prédéterminée.

*5.3.1. Première variante (image saturée)*

Nous décrivons une première variante, en mode "saturé". Ce mode est facile à mettre en œuvre et consomme jusqu'à 4 bits de caractère aléatoire par image, ce qui est peu. Ce mode convient donc bien à des dispositifs qui ne disposent pas de capacités de traitement étendues. Dans cette variante ont met en œuvre une fonction appelée *random.choice,* qui sélectionne un élément uniformément au hasard parmi la collection fournie.

Ce mode ne génère que des couleurs totalement saturées, c'est-à-dire qu'il n'utilise pas les tonalités intermédiaires; D'autres variantes tirent parti de cette liberté supplémentaire, comme une deuxième présentée par la suite.

<u>US3(T):</u>

1. Créer 3 trames $F_0$, ..., $F_2$ de mêmes dimensions que T.

2. Soit c[0] = 0, c[1] = 1, c[2] = 2
3. Pour chaque position (x,y) dans T

    a. Soit k = random.choice(0, 1, 2)
    b. si T(x,y) est noire

        i. soit $c = 2^8 << 8^k$
        ii. soit $F_0(x,y) = F_1(x,y) = F_2(x,y) = c$

    c. sinon

        i. intervertir (c[0], c[k])
        ii. k' = random.choice(0, 1)
        iii. intervertir (c[1], c[k'+1])
        iv. pour chaque j = {0, 1, 2}, mettre à jour $F_j(x,y) = 2^8 << 8^{c[j]}$.

### 5.3.2. Deuxième variante (image plus douce)

Cette variante suivante utilise plus du spectre visuel, mais consomme jusqu'à 72 bits aléatoires par pixel. Elle n'est donc pas nécessairement adaptée aux dispositifs disposant de peu de capacité de traitement.

US3(T):

1. Créer 3 trames $F_0$, ..., $F_2$ de mêmes dimensions que T.
2. Soit c[0] = 0, c[1] = 1, c[2] = 2
3. Pour chaque position (x,y) dans T

    a. si img(x,y) est noir :

        i. soit uR = random.choice(0, ..., 127)
        ii. soit uG = random.choice(0, ..., 127)
        iii. soit uB = random.choice(0, ..., 127)
        iv. soit c = uR + (uG + (uB << 8) << 8)
        v. mise à jour de $F_0(x,y) = F_1(x,y) = F_2(x,y) = c$

    b. sinon

        i. pour chaque j dans {0, 1, 2}

            1. soit uR = random.choice(0, ..., 255)
            2. soit uG = random.choice(0, ..., 255)
            3. soit uB = random.choice(0, ..., 255)
            4. c = uR + (uG + (uB << 8) << 8)
            5. mettre à jour $F_j(x,y) = c$.

### 5.3.3. Principe de fonctionnement

Dans les deux variantes précédentes, le principe sous-jacent est celui de la corrélation. Les trames successives ayant une faible corrélation se rapprochent les unes des autres, résultant en un gris clair (qui code les valeurs blanches dans T). Les trames successives ayant une corrélation élevée se renforcent mutuellement, ce qui donne une teinte plus forte (qui code les valeurs noires dans T). Quoi qu'il en soit, à l'issue de cette mise en œuvre, trois images sont générées et elles peuvent être affichées les unes à la suite des autres puis l'algorithme est à nouveau exécuté afin de générer trois nouvelles images dégradées.

### 5.4. Autres variantes

Il est décrit ici, des variantes des modes de réalisation préalablement exposés. Un objectif des modes de réalisation et variantes présentés Précédemment, était qu'un lecteur humain puisse lire une image, sans que ceci ne soit possible pour l'ordinateur. Dans certaines applications comme les claviers aléatoires, il est possible de baisser le niveau de lisibilité, et de seulement permettre de distinguer les chiffres affichés. On peut souhaiter que l'utilisateur distingue le numéro écrit sur chaque touche, et que cette tâche soit impossible pour l'ordinateur. Ainsi, il est possible non pas d'ajouter, dans l'image un bruit uniformément aléatoire, mais au contraire d'ajouter un bruit aléatoire généré à partir d'une ou plusieurs images dégradées précédemment obtenues et/ou de l'image de référence (ou d'autres images de référence lorsque plusieurs images de références sont utilisées).

Une première variante du premier mode de réalisation, permettant seulement de distinguer les chiffres d'une image, comprend le remplacement dans la fonction F précédemment définie (pour mémoire $F(x) = \frac{\alpha x + \beta}{255\alpha + \beta} + \gamma$), la constante $\gamma$ par une fonction $\gamma(x)$, dans laquelle $x$ est la position du pixel.

À l'aide de cette modification, plus le pixel est sombre sur la somme de toutes les images différentes de celle que nous brouillons, plus la probabilité d'apparition est grande. Par exemple, pour trois images $T\_1$, $T\_2$, $T\_3$, le bruit $T\_1$ pourrait être une fonction linéaire de ($T\_2 + T\_3$) ou encore plus généralement, une fonction de ($T\_2$, $T\_3$), qui peut par exemple être une fonction croissante selon les deux variables, pour augmenter la sécurité de la méthode. En pratique, afin de maximiser la sécurité de la méthode, la fonction de ($T\_2$, $T\_3$) est croissante sur les deux variables.

Une deuxième variante du deuxième mode de réalisation, permettant de distinguer les chiffres d'une image, comprend juste le remplacement de la fonction aléatoire (appelée pour mémoire *random.choice*), de sorte que cette fonction puisse prendre en compte les images précédentes et ne soit plus une fonction uniforme. Pour ce faire, l'algorithme précédemment décrit (Usk(T)), prend comme argument, en plus de l'image de référence, une ou plusieurs images précédemment obtenues (dans une ou plusieurs itérations précédentes de l'algorithme) et/ou une ou plusieurs images fournies par ailleurs. La fonction *random.choice* peut quant à elle prendre comme argument des coordonnées (x,y) de points appartenant à ces images précédentes. D'une manière générale (tant pour cette variante que pour le mode de réalisation précédemment décrit), la fonction *random.choice* peut être choisie parmi une grande variété de fonctions. On peut y ajouter une contrainte selon laquelle le pixel obtenu à la fin par la fonction est en moyenne suffisamment proche des pixels correspondants des autres images.

L'information mutuelle, dans le cas de l'utilisation de groupes d'images (comme dans les deux variantes précédentes) peut, dans une autre variante, être utilisée de manière plus efficace, en mesurant l'information mutuelle de toutes les paires d'images (en mesurant la corrélation des variables aléatoires représentant chaque image). On peut alors combiner l'ensemble de ces mesures (les variables aléatoires d'images), en une seule mesure dont on souhaite effectuer une minimisation.

Par exemple, si l'on souhaite mesure le niveau de sécurité de trois images produites successivement (par l'une quelconque des méthodes précédemment présentées), on utilise l'information mutuelle entre deux paires d'images du groupe d'images. Supposons que l'on dispose de trois images 1, 2 et 3. On note $I(X, Y)$ l'information mutuelle entre deux images (X et Y). On effectue le calcul des informations mutuelles suivantes $I(0,1)$, $I(0,2)$, $I(1,2)$. On procède ensuite à une combinaison de ces informations, par exemple en effectuant les calculs suivants : $I\_0 = min(I(0,1), I(0,2))$, $I\_1 = min(I(1,0), I(1,2))$, et $I\_2 = min(1(2,0),1(2,1))$. Chacune de ces quantités $I\_i$ délivre une information relative à la difficulté de savoir si l'image est corrélée à (dérivée de) l'image i. Pour arriver à ce résultat, il est nécessaire d'avoir une variable aléatoire d'image d'une image courante éloignée de la variable aléatoire des images avec lesquelles on effectue la comparaison. Ensuite, on effectuer le calcul suivant $max(I\_0, I\_1, I\_2)$, qui permet de déterminer si les images générées sont suffisamment sécurisées (c'est-à-dire que l'on ne peut pas deviner qu'une image dégradée est issue d'une autre image, qu'elle soit elle-même dégradée ou que ce soit une image de référence ).

### 5.5. Autres caractéristiques et avantages

On décrit, en relation avec la figure 4, un terminal mis en œuvre pour gérer la production, à partir d'une image de référence représentative d'informations à afficher à l'écran, d'une pluralité d'images dégradées.

Par exemple, le terminal comprend une mémoire 41 comprenant par exemple une mémoire tampon, un processeur de traitement général 42, équipée par exemple d'un microprocesseur, et pilotée par un programme d'ordinateur 43, et/ou une mémoire sécurisée 44, un processeur de traitement sécurisé 45, pilotée par un programme d'ordinateur 46, ces unités de traitement mettant en œuvre des procédés de traitement de données tels que décrits précédemment pour effectuer la transformation d'une image de référence en une pluralité d'image dégradées en fonction d'au moins un paramètre de dégradation (également appelé paramètre d'aléa).

À l'initialisation, les instructions de code du programme d'ordinateur 46 sont par exemple chargées dans une mémoire avant d'être exécutées par le processeur de traitement sécurisé 45. Le processeur de traitement 45 reçoit en entrée au moins une donnée représentative d'informations à afficher à l'écran. Le processeur de traitement sécurisé 45 met en œuvre les étapes du procédé, pour notamment obtenir une image de référence : cette image de référence peut être générée directement par le processeur sécurise ou être téléchargée à partir de la mémoire sécurisée ; puis pour générer, à partir de l'image de référence, au moins une image dégradée et optionnellement, commander l'affichage itératif des images dégradées, selon les instructions du programme d'ordinateur 46 pour obtenir un phénomène de rémanence de l'information de l'image de référence, directement (par l'intermédiaire de l'écran d'affichage) ou non (par l'intermédiaire de la rétine des yeux de l'utilisateur). Pour cela, le terminal comprend, outre la mémoire 44, des moyens de communications, tels que des modules de communication réseau, des moyens de transmission de données et des circuits de transmission de données entre les divers composants du terminal.

Le terminal (ou le dispositif mettant en œuvre les techniques décrites) dispose par ailleurs de tous les moyens nécessaires à la mise en œuvre des méthodes, modes de réalisation et variantes décrits précédemment.

Les moyens précédemment décrits peuvent se présenter sous la forme d'un processeur particulier implémenté au sein d'un dispositif spécifique implanté au sein du terminal. Selon un mode de réalisation particulier, le terminal met en œuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

**Revendications**

1. Procédé de traitement de données d'affichage, le procédé étant mis en œuvre au sein d'un dispositif électronique de traitement de données, lesdites données d'affichage étant représentatives d'au moins une information à afficher sur un écran, le procédé comprenant :

   - une étape d'obtention (10) d'au moins une image de référence (IRef) représentative de la dite au moins une information à afficher ;
   - une étape de génération (20, 30), à partir de ladite image de référence (IRef) et d'au moins un paramètre de dégradation (PDeg), d'au moins une image dégradée (ID1,..., IDn),

   **caractérisé en ce que** ladite étape de génération met en œuvre au moins une procédure d'adjonction de bruit à ladite image de référence (IRef) comprenant la génération d'un nombre prédéterminé (K) d'images dégradées à l'aide d'un générateur d'images dégradées (Usk) mettant en œuvre, pour chaque pixel (x,y) de l'image de référence, une distinction de traitement selon la couleur dudit pixel, ladite distinction de traitement comprenant :

   - l'attribution d'une même couleur aléatoire donnée pour les pixels (x,y) correspondant des (K) images dégradées lorsque la couleur du pixel (x,y) de l'image de référence est égal à une couleur prédéterminée ;
   - l'attribution d'une couleur aléatoire différente pour les pixels (x,y) correspondant des (K) images dégradées lorsque la couleur du pixel (x,y) de l'image de référence est différent de la couleur prédéterminée.

2. Procédé selon la revendication 1, **caractérisé en ce que** le nombre d'images dégradée (ID1,..., IDn) est supérieur ou égal à trois.

3. Procédé selon la revendication 1, **caractérisé en ce que** le nombre d'images dégradée (ID1,..., IDn) est supérieur ou égal à une fréquence d'affichage d'image de l'écran sur lequel lesdites images dégradées doivent être affichées.

4. Procédé selon la revendication 1, **caractérisé en ce que** ladite étape de génération (20, 30) d'au moins une image dégradée (ID1,..., IDn) met en œuvre une procédure d'extraction de portions de ladite image de référence (IRef) délivrant au moins une image dégradée.

5. Procédé selon la revendication 1, **caractérisé en ce que** ladite fonction d'adjonction de bruit à ladite image de référence (IRef), délivrant au moins une image dégradée, comprend, pour une pluralité de pixels de l'image de référence, l'application de l'expression suivante :

$$D_t(x, y) = A\, thr\, (F(T(x, y)))$$

dans laquelle:

A représente une valeur d'attribution ;

$D_t(x, y)$ représente le pixel de coordonnées $(x, y)$ de l'image dégradée $D_t$ ;

*thr* est une fonction de seuillage ;

*F* est une fonction de contraste ; et

$T(x, y)$ représente le pixel de coordonnées $(x, y)$ de l'image de référence notée *T*.

6. Procédé selon la revendication 5, **caractérisé en ce que** ladite fonction de contraste est :

$$F(x) = \frac{\alpha x + \beta}{255\alpha + \beta} + \gamma$$

dans laquelle :

$\alpha$ est un paramètre de contrôle de densité de l'image dégradée ;

$\beta$ est un paramètre de contrôle de contraste ; et

$\gamma$ est un paramètre de contrôle de niveau de bruit.

7. Procédé selon la revendication 1, **caractérisé en ce qu'**il comprend au moins une itération d'une étape d'affichage (40) de ladite au moins une image dégradée.

8. Procédé selon la revendication 1, **caractérisé en ce que** ladite image de référence (IRef) est représentative d'un clavier aléatoire à afficher.

9. Dispositif de traitement de données d'affichage, lesdites données d'affichage étant représentatives d'au moins une information à afficher sur un écran, dispositif comprenant :

- des moyens d'obtention (10) d'une image de référence (IRef) représentative de la dite au moins une information à afficher ;
- des moyens de génération (20, 30), à partir de ladite image de référence (IRef) et d'au moins un paramètre de dégradation (PDeg), d'au moins une image dégradée (ID1,..., IDn) ; **caractérisé en ce que** ces moyens mettent en œuvre au moins une procédure d'adjonction de bruit à ladite image de référence (IRef) comprenant la génération d'un nombre prédéterminé (K) d'images dégradées à l'aide d'un générateur d'images dégradées (Usk) mettant en œuvre, pour chaque pixel (x,y) de l'image de référence, une distinction de traitement selon la couleur dudit pixel, ladite distinction de traitement comprenant :

- l'attribution d'une même couleur aléatoire donnée pour les pixels (x,y) correspondant des (K) images dégradées lorsque la couleur du pixel (x,y) de l'image de référence est égal à une couleur prédéterminée ;
- l'attribution d'une couleur aléatoire différente pour les pixels (x,y) correspondant des (K) images dégradées lorsque la couleur du pixel (x,y) de l'image de référence est différent de la couleur prédéterminée.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1, lorsqu'il est exécuté sur un ordinateur.

**Patentansprüche**

1. Verfahren zur Verarbeitung von Anzeigedaten, wobei das Verfahren innerhalb einer elektronischen Datenverarbeitungsvorrichtung durchgeführt wird, wobei die Anzeigedaten mindestens eine auf einem Bildschirm anzuzeigende Information darstellen, wobei das Verfahren umfasst:

- einen Schritt des Erhaltens (10) mindestens eines Referenzbildes (IRef), das die mindestens eine anzuzeigende Information darstellt;
- einen Schritt des Erzeugens (20, 30), ausgehend von dem Referenzbild (IRef) und von mindestens einem Degradationsparameter (PDeg), von mindestens einem Degradationsbild (ID1,..., IDn),

**dadurch gekennzeichnet, dass** der Erzeugungsschritt mindestens einen Prozess zum Hinzufügen von Rauschen zu dem Referenzbild (IRef) durchführt, das das Erzeugen einer vorbestimmten Anzahl (K) von degradierten Bildern mithilfe eines Generators (Usk) für degradierte Bilder umfasst, der für jedes Pixel (x, y) des Referenzbildes eine Verarbeitungsunterscheidung gemäß der Farbe des Pixels durchführt, wobei die Verarbeitungsunterscheidung umfasst:

- Zuweisen derselben gegebenen zufälligen Farbe für die Pixel (x, y), die den (K) degradierten Bildern entsprechen, wenn die Farbe des Pixels (x, y) des Referenzbildes einer vorbestimmten Farbe entspricht;
- Zuweisen einer anderen zufälligen Farbe für die Pixel (x, y), die den (K) degradierten Bildern entsprechen, wenn die Farbe des Pixels (x, y) des Referenzbildes von der vorbestimmten Farbe abweicht.

2. Verfahren nach Anspruch 1, **dadurch gekennzeichnet, dass** die Anzahl der degradierten Bilder (ID1,..., IDn) größer oder gleich drei ist.

3. Verfahren nach Anspruch 1, **dadurch gekennzeichnet, dass** die Anzahl der degradierten Bilder (ID1,..., IDn) größer oder gleich einer Bildanzeigefrequenz des Bildschirms ist, auf dem die degradierten Bilder angezeigt werden sollen.

4. Verfahren nach Anspruch 1, **dadurch gekennzeichnet, dass** der Schritt des Erzeugens (20, 30) mindestens eines degradierten Bildes (ID1,..., IDn) einen Prozess zum Extrahieren von Abschnitten des Referenzbildes (IRef) durchführt, das mindestens ein degradiertes Bild liefert.

5. Verfahren nach Anspruch 1, **dadurch gekennzeichnet, dass** die Funktion des Hinzufügens von Rauschen zu dem Referenzbild (IRef), das mindestens ein degradiertes Bild liefert, für eine Vielzahl von Pixeln des Referenzbildes die Anwendung des folgenden Ausdrucks umfasst:

$$D_t(x, y) = A \, thr \, (F(T(x, y)))$$

wobei:

A einen Zuweisungswert darstellt;
$D_t(x,y)$ das Koordinatenpixel (x, y) des degradierten Bildes $D_t$ darstellt;
*thr* eine Schwellenwertfunktion ist;
*F* eine Kontrastfunktion ist; und
$T(x,y)$ das Koordinatenpixel (x, y) des Referenzbildes mit der Bezeichnung *T* darstellt.

6. Verfahren nach Anspruch 5, **dadurch gekennzeichnet, dass** die Kontrastfunktion wie folgt ist:

$$F(x) = \frac{ax + \beta}{255\alpha + \beta} + \gamma$$

wobei:

$\alpha$ ein Parameter zur Steuerung der Dichte des degradierten Bildes ist;
$\beta$ ein Kontraststeuerungsparameter ist; und
$\gamma$ ein Parameter zur Steuerung des Rauschpegels.

7. Verfahren nach Anspruch 1, **dadurch gekennzeichnet, dass** es mindestens eine Iteration eines Anzeigeschritts (40) des mindestens einen degradierten Bildes umfasst.

8. Verfahren nach Anspruch 1, **dadurch gekennzeichnet, dass** das Referenzbild (IRef) eine anzuzeigende zufällige Tastatur darstellt.

9. Vorrichtung zur Verarbeitung von Anzeigedaten, wobei die Anzeigedaten mindestens eine auf einem Bildschirm anzuzeigende Information darstellen, die Vorrichtung umfassend:

- Mittel zum Erhalten (10) eines Referenzbildes (IRef), das die mindestens eine anzuzeigende Information darstellt;

- Mittel zum Erzeugen (20, 30), ausgehend von dem Referenzbild (IRef) und dem mindestens einen Degradationsparameter (PDeg), von mindestens einem Degradationsbild (ID1,..., IDn); **dadurch gekennzeichnet, dass** diese Mittel mindestens einen Prozess zum Hinzufügen von Rauschen zu dem Referenzbild (IRef) durchführen, das das Erzeugen einer vorbestimmten Anzahl (K) von degradierten Bildern mithilfe eines Generators (Usk) für degradierte Bilder umfasst, der für jedes Pixel (x, y) des Referenzbildes eine Verarbeitungsunterscheidung gemäß der Farbe des Pixels durchführt, wobei die Verarbeitungsunterscheidung umfasst:

- Zuweisen derselben gegebenen zufälligen Farbe für die Pixel (x, y), die den (K) degradierten Bildern entsprechen, wenn die Farbe des Pixels (x, y) des Referenzbildes einer vorbestimmten Farbe entspricht;
- Zuweisen einer anderen zufälligen Farbe für die Pixel (x, y), die den (K) degradierten Bildern entsprechen, wenn die Farbe des Pixels (x, y) des Referenzbildes von der vorbestimmten Farbe abweicht.

10. Computerprogrammprodukt, das aus einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Programmcodeanweisungen zum Ausführen eines Verarbeitungsverfahrens gemäß Anspruch 1 umfasst, wenn es auf einem Computer ausgeführt wird.

**Claims**

1. Method for processing display data, the method being implemented by an electronic data processing device, said display data representing at least one piece of information to be displayed on a screen, the method comprising:

- a step (10) for obtaining at least one reference image (Ref) representing said at least one piece of information to be displayed;
- a step (20, 30) for generating at least one altered image ((ID1,..., IDn) from said reference image (IRef) and from at least one alteration parameter (PDeg),

**characterized in that** said generating step implements at least one procedure for adding noise to said reference image (IRef), comprising the generation of a pre-determined number (K) of altered images by means of a altered image generator which, for each pixel (x, y) of the reference image, carries out a processing distinction according to the color of said pixel, said processing distinction comprising:

- the assigning of a same given random color for the corresponding pixels (x, y) of the (K) altered images when the color of the pixel (x, y) of the reference image is equal to a pre-determined color;
- the assigning of a different random color for the corresponding pixels (x, y) of the (K) altered images when the color of the pixel (x, y) of the reference image is different from the pre-determined color.

2. Method according to claim 1, **characterized in that** the number of altered images (ID1, ..., IDn) is greater than or equal to three.

3. Method according to claim 1, **characterized in that** the number of altered images (ID1, ..., IDn) is greater than or equal to a frequency of display of the image of the screen on which said altered images must be displayed.

4. Method according to claim 1, **characterized in that** step (20, 30) for generating at least one altered image ((ID1, ..., IDn) delivers a procedure for extracting portions of said reference image (IRef) delivering at least one altered image.

5. Method according to claim 1, **characterized in that** said function of adding noise to said reference image (IRef) delivering at least one altered image comprises, for a plurality of pixels of the reference image, the application of the following expression:

$$D_t(x, y) = A\, \mathrm{thr}(F(T(x, y)))$$

wherein:

$A$ represents a value of assigning;

$D_t(x, y)$ represents the pixel having co-ordinates $(x, y)$ of the altered image $D_t$;
Thr is a thresholding function;
$F$ is a contrast function; and
$T(x, y)$ r represents the pixel having co-ordinates $(x, y)$ of the reference image denoted $T$.

6.  Method according to claim 5, **characterized in that** said contrast function is:

$$F(x) = \frac{\alpha x + \beta}{255\alpha + \beta} + \gamma$$

wherein:

$\alpha$ is a parameter of control of density of the altered image;
$\beta$ is a contrast control parameter; and
$\gamma$ is a noise-level control parameter.

7.  Method according to claim 1, **characterized in that** it comprises at least one iteration of a step (40) of display of said at least one altered image.

8.  Method according to claim 1, **characterized in that** said at least one reference image (IRef) represents a random keypad to be displayed.

9.  Device for processing of display data, said display data representing at least one piece of information to be displayed on a screen, device comprising:

    - means (10) for obtaining a reference image (Ref) representing said at least one piece of information to be displayed;
    - means (20, 30) for generating at least one altered image (ID1, ..., IDn) from said reference image (IRef) and from at least one alteration parameter (PDeg); **characterized in that** these means implement at least one procedure for adding noise to said reference image (IRef), comprising the generation of a pre-determined number (K) of altered images by means of a altered image generator which, for each pixel (x, y) of the reference image, carries out a processing distinction according to the color of said pixel, said processing distinction comprising:

        - the assigning of a same given random color for the corresponding pixels (x, y) of the (K) altered images when the color of the pixel (x, y) of the reference image is equal to a pre-determined color;
        - the assigning of a different random color for the corresponding pixels (x, y) of the (K) altered images when the color of the pixel (x, y) of the reference image is different from the pre-determined color.

10. Computer program product downloadable from a communications network and/or stored on a computer-readable medium and/or executable by a microprocessor, **characterized in that** it comprises program code instructions for the execution of a method of processing according to claim 1 when it is executed on a computer.

Figure 1

Figure 2

Figure 3

Figure 4

**EP 4 531 033 B1**

**Documents brevets cités dans la description**

- FR 3023042

- EP 2023333 A